# EUROPEAN PATENT APPLICATION

(11) **EP 2 843 384 A1**
(43) Date of publication of application: **04.03.2015**
(21) Application number: 14182187.6
(22) Date of filing: 26.08.2014
(51) Int. Cl.: G01K 7/25

(54) **Temperature measurement apparatus using negative temperature coefficient thermister**

(30) Priority: 02.09.2013 KR 20130104938
(71) Applicant: LSIS Co., Ltd., Anyang-si, Gyeonggi-do 431-848 (KR)
(72) Inventor: Jin, Ho Sang, 431-848 Anyang-si, Gyeonggi-do (KR); Yang, Chun Suk, 431-848 Anyang-si, Gyeonggi-do (KR); Lee, Jae Ho, 431-848 Anyang-si, Gyeonggi-do (KR); Park, Chan Gi, 431-848 Anyang-si, Gyeonggi-do (KR)
(74) Representative: Lang, Johannes

(57) **Abstract**

A temperature measurement apparatus using a negative temperature coefficient (NTC) thermister is provided. A temperature sensor includes the NTC thermister and a variable resistor part, in which a resistance value of the variable resistor part varies between a first resistance value for a first output voltage value and a second resistance value for a second output voltage value to allow a voltage value corresponding to a present temperature to be outputted. A voltage temperature matching unit outputs the present temperature based on the first output voltage value and the second output voltage value.

## Description

### CROSS-REFERENCE TO RELATED APPLICATIONS

The present application claims priority under 35 U.S.C. 119 and 35 U.S.C. 365 to Korean Patent Application No. 10-2013-0104938(filed on September 2nd, 2013), which is hereby incorporated by reference in its entirety.

### BACKGROUND

The present disclosure relates to a temperature measurement apparatus using a temperature coefficient (NTC) thermister.

The NTC thermister has an NTC and continuously changes in electric resistance, which is used as a temperature sensor due to such features. Particularly, in case of automobiles and electric automobiles stably operating within a range from about - 45°C to about 120°C, a temperature is measured using a temperature sensor using the NTC thermister. Also, components of automobiles and electric automobiles are protected by controlling charging a battery, etc. according to a measured temperature.

Merely, due to properties of the temperature sensor using the NTC, a range of fluctuation in voltage according to a temperature near a lower limit value or an upper limit value of a measurement range of the temperature sensor is not great. Accordingly, a temperature measured near the lower limit value or the upper limit value of the measurement range of the temperature sensor may be inaccurate. Accordingly, it is necessary to precisely measure a temperature near the lower limit value or the upper limit value of the measurement range of the NTC temperature sensor.

### SUMMARY

Embodiments provide a temperature measurement apparatus capable of precisely measuring a temperature near a lower limit value or an upper limit value of a measurement range of a temperature sensor by using a negative temperature coefficient (NTC) thermister.

In one embodiment, a temperature measurement apparatus using a negative temperature coefficient (NTC) thermister includes a temperature sensor including the NTC thermister and a variable resistor part, in which a resistance value of the variable resistor part varies between a first resistance value for a first output voltage value and a second resistance value for a second output voltage value to allow a voltage value corresponding to a present temperature to be outputted and a voltage temperature matching unit outputting the present temperature based on the first output voltage value and the second output voltage value.

In another embodiment, a temperature measurement apparatus using an NTC thermister includes the NTC thermister including one end, to which a direct current (DC) voltage is applied, a variable resistor part including one end connected to another end of the NTC thermister and another grounded, having a first resistance value for a first output voltage value and a second resistance value for a second output voltage value, and a voltage temperature matching unit outputting a present temperature based on the first output voltage value and the second output voltage value.

A temperature near a lower limit value and an upper limit value of a temperature measurable range of the temperature sensor using the NTC thermister may be precisely measured. According thereto, a reliability of controlling a charging operation according to a temperature in an automobile and an electric automobile using the temperature sensor using the NTC thermister may increase.

The details of one or more embodiments are set forth in the accompanying drawings and the description below. Other features will be apparent from the description and drawings, and from the claims.

### BRIEF DESCRIPTION OF THE DRAWINGS

FIG. 1 is a block diagram of a temperature measurement apparatus according to an embodiment;
FIG. 2 is a circuit diagram of the temperature measurement apparatus of FIG. 1;
FIG. 3 is a flowchart illustrating operations of the temperature measurement apparatus of FIG. 1;
FIG. 4 illustrates changes of a temperature-voltage curve of a temperature sensor using a negative temperature coefficient (NTC) according to a fixed resistance value included in the temperature sensor;
FIG. 5 illustrates changes of a temperature-voltage curve of a temperature sensor using an NTC according to another embodiment according to a variable resistance value included in the temperature sensor;
FIG. 6 is a block diagram of a temperature measurement apparatus according to another embodiment;
FIG. 7 is a circuit diagram of the temperature measurement apparatus of FIG. 6; and
FIG. 8 is a flowchart illustrating operations of the temperature measurement apparatus of FIG. 6.

### DETAILED DESCRIPTION OF THE EMBODIMENTS

Hereinafter, with reference to the attached drawings, exemplary embodiments will be described in detail to allow those skilled in the art to easily execute the same. However, the embodiments may be provided as various different forms and are not limited thereto. Also, in the drawings, in order to definitely describe the embodiments, an irrelevant part will be omitted. Throughout the specification, like reference numerals refer to like elements.

Also, it will be further understood that the terms "comprises" and/or "comprising" used herein, unless the context clearly indicates otherwise, specify the further presence of other components, but do not preclude the presence or addition of one or more other components.

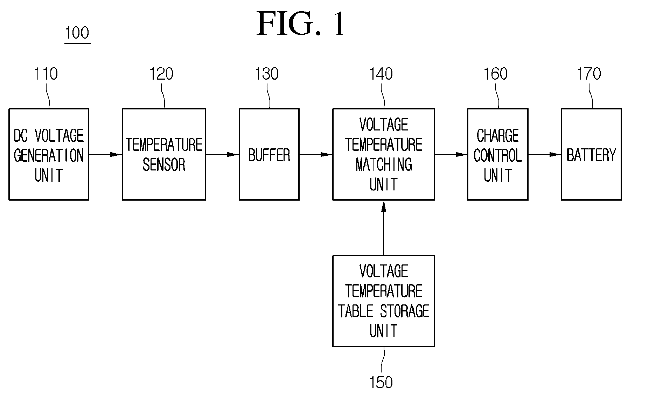

Hereinafter, referring to FIGS. 1 to 3, a temperature measurement apparatus 100 according to an embodiment will be described.

FIG. 1 is a block diagram of the temperature measurement apparatus 100.

Referring to FIG. 1, the temperature measurement apparatus 100 includes a direct current (DC) current generation unit 110, a temperature sensor 120, a buffer 130, a voltage temperature matching unit 140, a voltage temperature table storage unit 150, a charge control unit 160, and a battery 170.

The DC voltage generation unit 110 generates a DC voltage.

The voltage temperature table storage unit 150 stores a voltage temperature table. The voltage temperature table includes a plurality of temperature values corresponding to a plurality of output voltages of the temperature sensor 120, respectively.

The charge control unit 160 controls a charging operation related to the battery 170 of an electric automobile according to a present temperature.

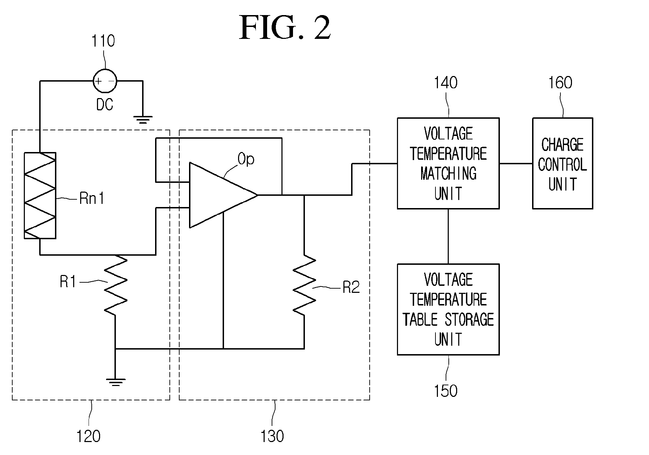

Other components of the temperature measurement apparatus 100 will be described in detail with reference to FIG. 2.

FIG. 2 is a circuit diagram of the temperature measurement apparatus 100.

The temperature sensor 120 includes a negative temperature coefficient (NTC) thermister Rn1 and a fixed resistor R1. The NTC thermister Rn1 has one end, to which a DC voltage generated by the DC voltage generation unit 110 is applied. The fixed resistor R1 has one end connected to another end of the NTC thermister Rn1 and another end grounded.

A voltage applied to the fixed resistor R1 is allowed to be an output voltage of the temperature sensor 120. The output voltage of the temperature sensor 120 is the intensity of the fixed resistor R1/(a resistance value of the NTC thermister Rn1 + the intensity of the fixed resistor R1). The resistance value of the NTC thermister Rn1 becomes smaller as a temperature increases. Accordingly, an output voltage becomes greater as the temperature increases. On the contrary, the resistance value of the NTC thermister Rn1 becomes greater as the temperature decreases. Accordingly, the output voltage becomes smaller as the temperature decreases.

The buffer 130 includes an operational amplifier Op and a fixed resistor R2. An input end of the operational amplifier Op is connected to the one end of the fixed resistor R1, to which an output of the temperature sensor 120 is applied, and the other end of the NTC thermister Rn1. The fixed resistor R2 has one end connected to an output end of the operational amplifier Op and another end grounded. Since the buffer 130 includes the operational amplifier Op, which is an active element, the output voltage of the temperature sensor 120 may be buffered without a load effect and a buffered voltage may be outputted.

An input end of the voltage temperature matching unit 140 is connected to the output end of the operational amplifier Op and the one end of the fixed resistor R2.

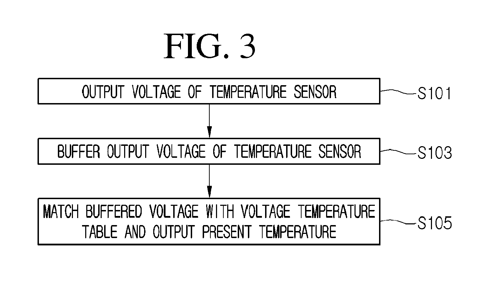

FIG. 3 is a flowchart illustrating operations of the temperature measurement apparatus 100.

The temperature 120 outputs a voltage value corresponding to the present temperature by using the resistance value of the NTC thermister Rn1, varying with a temperature (S101).

The buffer 130 buffers the output voltage of the temperature sensor 120 and outputs a buffered voltage (S103). When the temperature sensor 120 and the voltage temperature matching unit 140 are directly connected to each other without the buffer 130, since the load effect occurs and drops a voltage, it is impossible to transmit an accurate voltage value. Accordingly, the output voltage of the temperature sensor 120 may be accurately transmitted to the voltage temperature matching unit 140 through the buffer 130.

The voltage temperature matching unit 140 matches the buffered voltage with a voltage on the voltage temperature table stored in the voltage temperature table storage unit 150 and outputs a present temperature corresponding to the buffered voltage value (S105). The voltage temperature table varies with properties of the temperature sensor 120. On the other hand, the buffer 130 may be omitted. In this case, the voltage temperature matching unit 140 may output a present temperature corresponding to the output voltage of the temperature sensor 120.

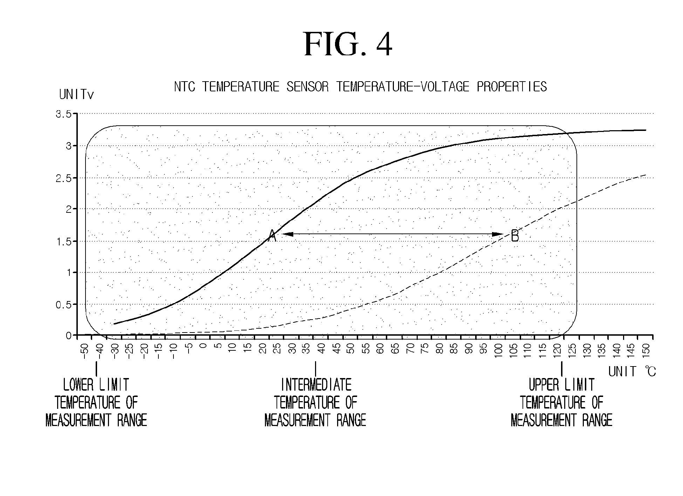

Hereinafter, referring to FIGS. 4 to 8, a temperature measurement apparatus using an NTC temperature sensor according to another embodiment will be described.

FIG. 4 illustrates changes of a temperature-voltage curve of the temperature sensor 120 using a negative temperature coefficient (NTC) according to a fixed resistance value included in the temperature sensor 120.

The output voltage of the temperature sensor 120 is the intensity of the fixed resistor R1/(the resistance value of the NTC thermister Rn1 + the intensity of the fixed resistor R1). Accordingly, at a high temperature, in which the resistance value of the NTC thermister Rn1 is relatively small as the intensity of the fixed resistor R1 increases, an effect of changes in the resistance value of the NTC thermister Rn1 becomes insignificant in such a way that the curve of FIG. 4 moves toward an A curve. On the contrary, at a low temperature, in which the resistance value of the NTC thermister Rn1 is relatively great as the intensity of the fixed resistor R1 decreases, the effect of changes in the resistance value of the NTC thermister Rn1 becomes insignificant in such a way that the curve of FIG. 4 moves toward a B curve. Due to such properties of the temperature sensor 120, it becomes inaccurate to measure a temperature at the low temperature or the high temperature according to the intensity of the fixed resistor R1 included in the temperature sensor 120.

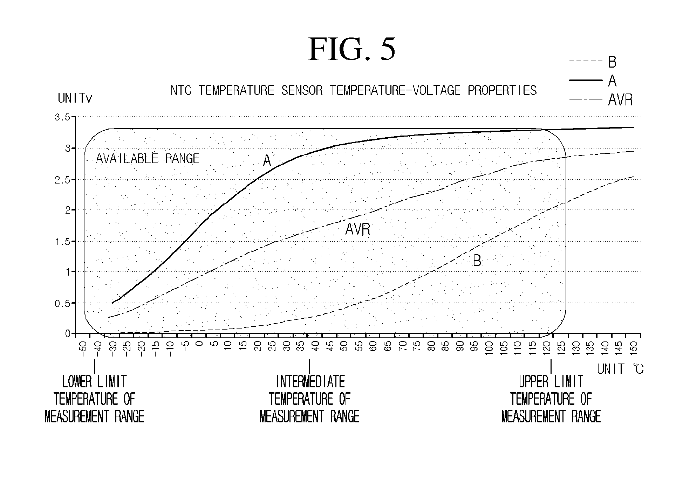

FIG. 5 illustrates changes of a temperature-voltage curve of a temperature sensor using an NTC according to another embodiment according to a variable resistance value included in the temperature sensor.

In case of the embodiment of FIG. 4, as described above, according to the intensity of the fixed resistor R1 included in the temperature sensor 120, there is a limitation in measuring an accurate temperature at the low temperature or the high temperature. Accordingly, in another embodiment, to overcome the limitation, a variable resistor is included in the temperature sensor 120 instead of the fixed resistor R1. After the variable resistor is allowed to have a plurality of values, the temperature sensor 120 outputs voltage values corresponding to respective variable resistance values and matches mean values of the outputted voltage values with temperatures.

A linearity of temperature-voltage properties is allowed to increase at an intermediate temperature or more of a temperature measurement range. That is, to allow an inclination of a temperature-voltage curve at the intermediate temperature or more of the temperature measurement range to be greater than an inclination thereof at less than the intermediate temperature of the temperature measurement range, a first output voltage value is outputted by adjusting a value of the variable resistor included in the temperature sensor 120. In this case, in FIG. 5, the curve shows as the B curve. According thereto, a temperature at the intermediate temperature or more of the temperature measurement range is allowed to be precisely measured.

Also, the linearity of temperature-voltage properties is allowed to increase at less than the intermediate temperature of the temperature measurement range. That is, to allow the inclination of a temperature-voltage curve at the intermediate temperature or more of the temperature measurement range to be smaller than the inclination thereof at less than the intermediate temperature of the temperature measurement range, a second output voltage value is outputted by adjusting the variable resistance value. In this case, in FIG. 5, the curve shows as the A curve. According thereto, a temperature at less than the intermediate temperature of the temperature measurement range is allowed to be precisely measured.

After the plurality of voltage values are outputted while allowing variable resistance values to be different one another, a mean voltage value of the voltage values is matched with a temperature, thereby showing temperature-voltage properties as an AVR curve of FIG. 5. Accordingly, the linearity may be shown throughout the entire section of the temperature measurement range and it is possible to precisely measure a temperature in the entire section of the temperature measurement range. Through this, in another embodiment, it is allowed to be performed to precisely measure the temperature.

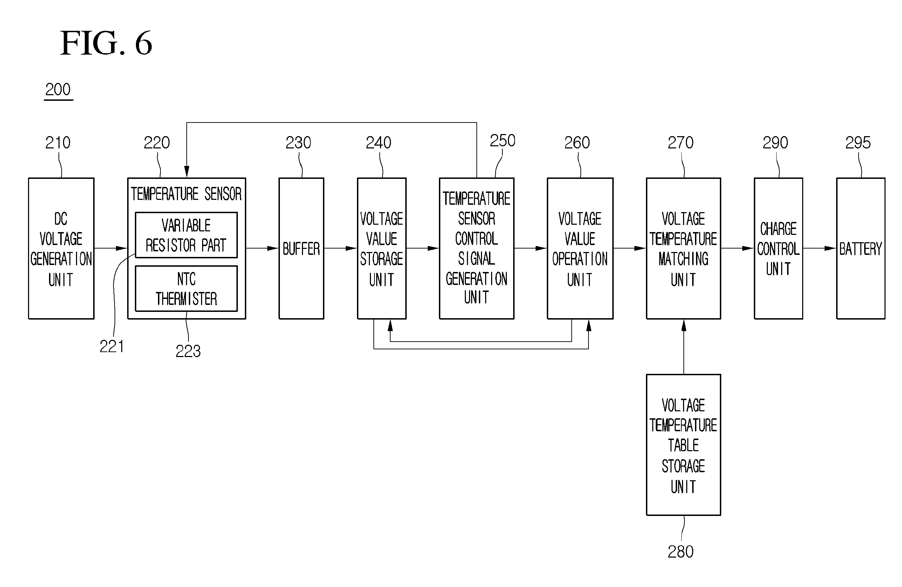

FIG. 6 is a block diagram of a temperature measurement apparatus 200 according to another embodiment.

Referring to FIG. 6, the temperature measurement apparatus 200 may include a DC current generation unit 210, a temperature sensor 220, a buffer 230, a voltage value storage unit 240, a temperature sensor control signal generation unit 250, a voltage value operation unit 260, a voltage temperature matching unit 270, a voltage temperature table storage unit 280, a charge control unit 290, and a battery 295.

The DC voltage generation unit 210 generates a DC voltage.

The temperature sensor 220 includes an NTC thermister 223 and a variable resistor part 221. The variable resistor part 221 has one of a plurality of resistance values under the control of the voltage value operation unit 260. In this case, the plurality of resistance values includes a first resistance value for a first output voltage value and a second resistance value for a second output voltage value.

The voltage temperature table storage unit 270 stores a voltage temperature table. The voltage temperature table includes a plurality of temperature values corresponding to a plurality of values, which are the mean of the first output voltage value and the second output voltage value.

The charge control unit 290 controls a charging operation related to the battery 295 of an electric automobile according to a present temperature.

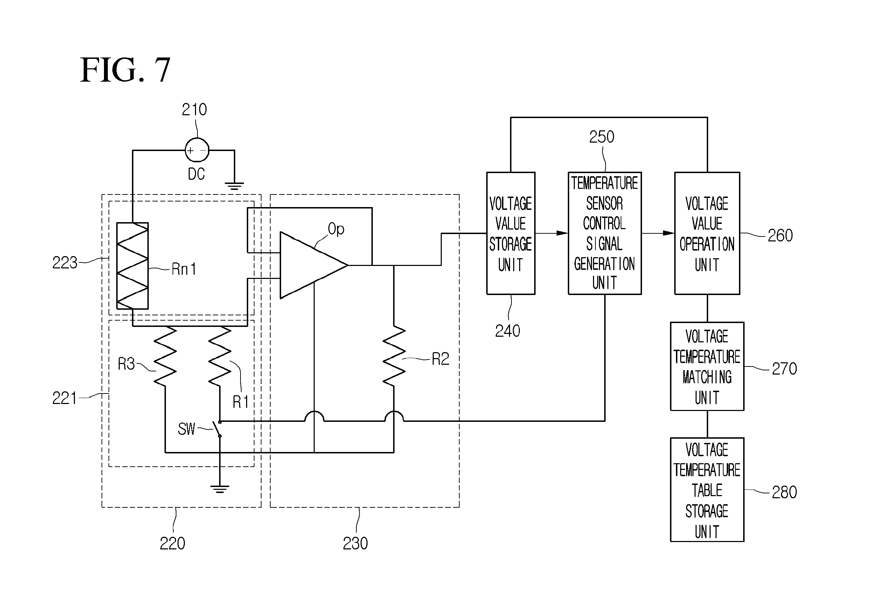

Other components of the temperature measurement apparatus 200 will be described in detail with reference to FIG. 7.

FIG. 7 is a circuit diagram of the temperature measurement apparatus 200.

The temperature sensor 220 includes an NTC thermister Rn2, a resistor R3, a resistor R4, and a switch SW. The NTC thermister Rn2 has one end, to which a DC voltage generated by the DC voltage generation unit 210 is applied. The resistor R3 has one end connected to another end of the NTC thermister Rn2 and another end grounded.

The fixed resistor R4 and the switch SW are connected in series between the NTC thermister Rn2 and a ground. In the embodiment, one end of the fixed resistor R4 is connected to the NTC thermister Rn2 and one end of the switch SW is connected to another end of the resistor R4 and another end thereof grounded. In another example, one end of the switch SW is connected to the NTC thermister Rn2 and one end of the resistor R4 is connected to another end of the switch SW and another end thereof is grounded.

In the embodiment of FIG. 7, when the switch SW is turned on, a combined resistance value of the fixed resistor R3 and the fixed resistor R4 may be the first resistance value for the first output voltage value. When the switch SW is turned off, the combined resistance value of the fixed resistor R3 and the fixed resistor R4 may be the second resistance value for the second output voltage value.

In a graph of FIG. 5, to allow temperature-voltage properties of the temperature sensor 220 to correspond to the B curve rather than the A curve, the first resistance value of the variable resistor part 221 may be smaller than a resistance value of the NTC thermister Rn2 at the intermediate temperature of the temperature measurement range. The first resistance value of the variable resistor part 221 may be smaller than 1/5 of the resistance value of the NTC thermister Rn2 at the intermediate temperature of the temperature measurement range.

In the graph of FIG. 5, to allow the temperature-voltage properties of the temperature sensor 220 to correspond to the B curve rather than the A curve, the second resistance value of the variable resistor part 221 may be greater than the resistance value of the NTC thermister Rn2 at the intermediate temperature of the temperature measurement range. To improve the linearity of the temperature-voltage properties of the temperature sensor 220 between an upper limit temperature and an intermediate temperature of the temperature measurement range, the second resistance value of the variable resistor part 221 may be greater than five times the resistance value of the NTC thermister Rn2 at the intermediate temperature of the temperature measurement range.

The switch SW may be turned on or off according to a temperature sensor control signal. Particularly, the switch SW may be a transistor such as metal-oxide semiconductor field effect transistor (MOSFET).

The buffer 230 includes an operational amplifier Op and a fixed resistor R5. An input end of the operational amplifier Op is connected to the one end of the fixed resistor R3, to which an output of the temperature sensor 220 is applied, and the other end of the NTC thermister Rn2. The fixed resistor R5 has one end connected to an output end of the operational amplifier Op and another end grounded. Since the buffer 230 includes the operational amplifier Op, which is an active element, the output voltage of the temperature sensor 220 may be buffered without a load effect and a buffered voltage may be outputted.

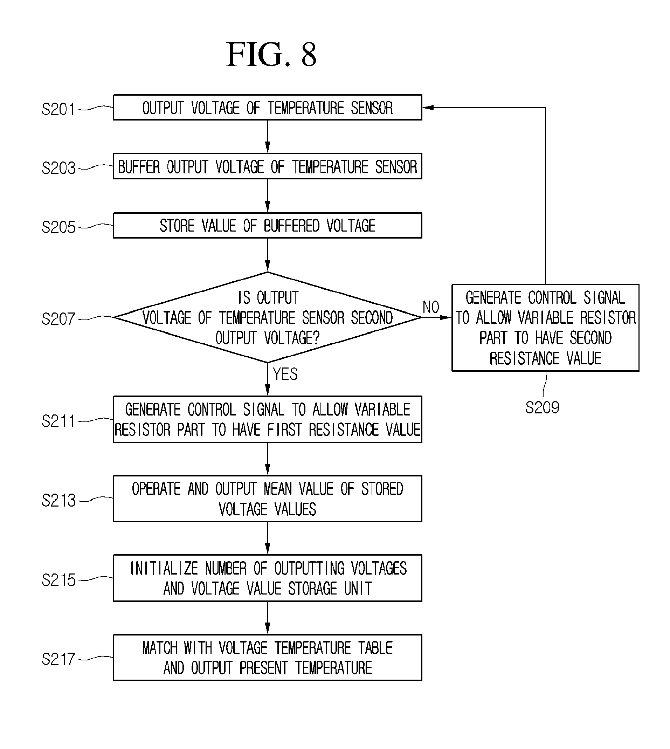

FIG. 8 is a flowchart illustrating operations of the temperature measurement apparatus 200.

The temperature 220 outputs a first output voltage value corresponding to a present temperature by using the resistance value of the NTC thermister Rn2, varying with a temperature, and the first resistance value of the variable resistor part 211 (S201).

The buffer 230 buffers the output voltage of the temperature sensor 220 and outputs a buffered voltage (S203). When the temperature sensor 220 and the voltage value storage unit 240 are directly connected to each other without the buffer 230, since a load effect may occur and a voltage may be dropped, it is impossible to transmit an accurate voltage value. Accordingly, the output voltage of the temperature sensor 220 may be accurately transmitted to the voltage value storage unit 240 through the buffer 230.

The voltage value storage unit 240 stores a value of the buffered voltage (S205). On the other hand, the buffer 230 may be omitted, in which the voltage value storage unit 240 stores an output voltage value of the temperature sensor 220.

The temperature sensor control signal generation unit 250 determines whether the output voltage value of the temperature sensor 220 is the second output voltage value (S207).

When the output voltage value of the temperature sensor 220 is not the second output voltage value, the temperature sensor control signal generation unit 250 generates a control signal to allow the variable resistor part 221 to have the second resistance value (S209). Particularly, in the embodiment of FIG. 7, the temperature sensor control signal generation unit 250 generates the control signal and turns off the switch SW connected to the fixed resistor R4. Only the fixed resistor R3 is connected to the NTC thermister Rn2, thereby allowing the variable resistor part 221 to have the second resistance value for the second output voltage value.

When the output voltage value of the temperature sensor 220 is the second output voltage value, the temperature sensor control signal generation unit 250 generates a control signal to allow the variable resistor part 221 to have the first resistance value (S211). Particularly, in the embodiment of FIG. 7, the temperature sensor control signal generation unit 250 generates the control signal and turns on the switch SW connected to the fixed resistor R4. Both the fixed resistor R3 and the fixed resistor R4 are connected to the NTC thermister Rn2, thereby allowing the variable resistor part 221 to have the first resistance value for the first output voltage value.

The voltage value operation unit 260 outputs a mean of the first output voltage and the second output voltage value stored in the voltage value storage unit 240 (S213).

The voltage value operation unit 260, after performing operation, initializes the number of outputting voltages and the output voltage values stored in the voltage value storage unit 240 (S215).

The voltage temperature matching unit 270 matches the mean buffered voltages with a voltage on the voltage temperature table stored in the voltage temperature table storage unit 280 and outputs a present temperature corresponding to the mean buffered voltage value (S217). The voltage temperature table may vary with the first resistance value of the variable resistor part 221, the second resistance value of the variable resistor part 221, and properties of the NTC thermister Rn2 of the temperature sensor 220. The voltage temperature table may store a temperature corresponding to a voltage value that is a mean of the output voltage values according to the first output voltage value and the second output voltage value.

Since the temperature is measured using the operations as described above, all the first output voltage value and the second output voltage value are outputted, thereby outputting the temperature. One of consuming largest times till the first output voltage value and the second voltage value are measured is turning on and off the switch. Accordingly, as the switch operates at a higher speed, the temperature may be more rapidly measured. When an MOSFET operating at a high speed, whose general open short-circuit operation time is less than 20 ms, is used as the switch, the temperature may be rapidly measured.

Features, structures, effects, etc. described in the above embodiments, are included in at least one embodiment and but are not limited to one embodiment. In addition, features, structures, effects, etc. described in the respective embodiments may be executed by a person of ordinary skill in the art while being combined or modified with respect to other embodiments. Accordingly, it will be understood that contents related the combination and modification will be included in the scope of the embodiments.

It should be understood that the exemplary embodiments described therein should be considered in a descriptive sense only and not for purposes of limitation. It will be understood by those of ordinary skill in the art that various changes in form and details may be made therein without departing from the spirit and scope of the embodiments. For example, respective components shown in detail in the embodiments may be executed while being modified. Also, it will be understood that differences related to the modification and application are included in the scope of the embodiments as defined by the following claims.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A temperature measurement apparatus using a negative temperature coefficient (NTC) thermister, comprising:
a temperature sensor(220) comprising the NTC thermistor(223) and a variable resistor part(221), in which a resistance value of the variable resistor part(221) varies between a first resistance value for a first output voltage value and a second resistance value for a second output voltage value to allow a voltage value corresponding to a present temperature to be outputted; and
a voltage temperature matching unit(270) outputting the present temperature based on the first output voltage value and the second output voltage value.

2. The temperature measurement apparatus of claim 1, wherein the first resistance value is smaller than a resistance value of the NTC thermistor(223) at an intermediate temperature of a temperature measurement range, and
wherein the second resistance value is greater than the resistance value of the NTC thermistor(223) at the intermediate temperature of the temperature measurement range.

3. The temperature measurement apparatus of claim 1, further comprising a voltage value operation unit(260) generating the first output voltage value and the second output voltage value.

4. The temperature measurement apparatus of claim 3, wherein the voltage temperature matching unit(270) outputs the present temperature based on a mean value of the first output voltage value and the second output voltage value.

5. The temperature measurement apparatus of claim 4, further comprising a voltage temperature table storage unit(280) storing a voltage temperature table comprising a plurality of temperature values corresponding to a plurality of mean values of the first output voltage value and the second output voltage value, respectively.

6. The temperature measurement apparatus of claim 1, wherein the variable resistor part(221) comprises a first fixed resistor, a second fixed resistor, and a switch.

7. The temperature measurement apparatus of claim 6, wherein the variable resistor part(221) varies between the first resistance value and the second resistance value depending on whether the switch is turned on.

8. A temperature measurement apparatus using an NTC thermister, comprising:
the NTC thermistor(223) comprising one end, to which a direct current (DC) voltage is applied;
a variable resistor part(221) comprising one end connected to another end of the NTC thermistor(223) and another grounded, having a first resistance value for a first output voltage value and a second resistance value for a second output voltage value; and
a voltage temperature matching unit(270) outputting a present temperature based on the first output voltage value and the second output voltage value.

9. The temperature measurement apparatus of claim 8, wherein the variable resistor part comprises:
a first fixed resistor(R3) comprising one end connected to the other end of the NTC thermistor(223) and another end grounded;
a second fixed resistor(R1) comprising one end connected to the other end of the NTC thermistor(223); and
a switch(SW) comprising one end connected to another end of the second fixed resistor and another end grounded.

10. The temperature measurement apparatus of claim 8, wherein the variable resistor part comprises:
a first fixed resistor comprising one end connected to the other end of the NTC thermistor(223) and another end grounded;
a switch comprising one end connected to the other end of the NTC thermister; and
a second fixed resistor comprising one end connected to another end of the switch and another end grounded.

11. The temperature measurement apparatus of claim 8, wherein the first resistance value is smaller than a resistance value of the NTC thermistor(223) at an intermediate temperature of a temperature measurement range, and
wherein the second resistance value is greater than the resistance value of the NTC thermistor(223) at the intermediate temperature of the temperature measurement range.

12. A method of operating a temperature measurement apparatus using an NTC thermister and comprising a variable resistor part, the method comprising:
outputting a voltage value corresponding to a present temperature by allowing a resistance value of the variable resistor part to vary between a first resistance value for a first output voltage value and a second resistance value for a second output voltage value; and
outputting the present temperature based on the first output voltage value and the second output voltage value.

13. The method of claim 12, wherein the first resistance value is smaller than a resistance value of the NTC thermister at an intermediate temperature of a temperature measurement range, and
wherein the second resistance value is greater than the resistance value of the NTC thermister at the intermediate temperature of the temperature measurement range.

14. The method of claim 12, wherein the outputting of the present temperature further comprises generating a mean value of the first output voltage value and the second output voltage value.

15. The method of claim 13, wherein the outputting of the present temperature further comprises outputting the present temperature based on the first output voltage value and the second output voltage value.
